# EUROPEAN PATENT APPLICATION

(11) **EP 1 553 341 A1**
(43) Date of publication of application: **13.07.2005**
(21) Application number: 04029444.9
(22) Date of filing: 13.12.2004
(51) Int. Cl.: F16L 29/00

(54) **Device for hermetically closing and draining containers of sewage and wastewater**

(30) Priority: 17.12.2003 IT PI20030105
(71) Applicant: DI.BI.TEC.s.r.l., 00178 Roma (IT)
(72) Inventor: Di Battista, Vittorio, 01033 Civita Castellana (VT) (IT); Traversari, Carmela, 01012 Capranica (VT) (IT)
(74) Representative: Turini, Laura

(57) **Abstract**

The present invention consists of a device consisting of a hollow membrane cylinder (1) that enters, like a plug, into a hole of a tank containing sewage. Said device is equipped, on its inner portion, with a membrane (3) easy to break, so that by pressing a nozzle, or other element, onto said membrane (3), it tears, so making the water contained into the tank easily flow out. The nozzle that breaks the membrane is hollow and connected to a collecting bag, therefore the water flows into the bag hygienically and preventing the operator to enter into direct contact with it.

## Description

### Technical Field

The present invention concerns the technical sector relative to the production of crushing boxes and/or toilets equipped with crushing tank and an integrated water pump having double function of crushing the organic waste together with the toilet paper and of flushing the sewage out.

In particular this invention aims at improving the system of manual flush, therefore of drainage of the crushing tank holding the water pump, which, in axes, includes a tool that crushes and simultaneously conveys the sewage.

### Background art

In order to better clarify the specific utility of this invention, it's necessary to shortly describe how the current equipments now work.

Nowadays, the toilets and/or tanks, equipped with crushing apparatus, are generally used in all those situations when it's necessary to insert a toilet and/or kitchen in definite existing buildings, where this utility was not previously provided and the plumbing was not supplied with pipes having suitable diameter, slope of flush, bends, or anything needs an efficient duct.

Said types of toilets and/or tanks, equipped with crushing apparatus, permit the passage of waste materials and waters through pipes having a quite small diameter, so that this utility can be applied in any area of the building, avoiding a series of devastating alterations necessary to make the discharge line according to the current building concept, which requires definite diameters in pipes and definite slope of flush. In addition, another advantage in the use of these types of toilets and/or tanks is that the water pump, placed in the crushing tank, conveys the crushed waste material in the sewage pipes. Said pump has in fact double function of pump and crushing apparatus, so conveying the wastewater in any direction, even with negative slopes. In this way, it's possible to install a toilet and/or kitchen also in areas of the flat that are lower than the sewage pipe of the sump pits, like in cellars, garages, in practice anywhere.

This characteristic, together with the fact that, thanks to the crushing apparatus, the duct needs pipes with smaller diameter, permits an easy installation, avoiding large invasive actions on the original building structure, making this system largely used in many environments and, consequently, it permits several building improvements, which are particularly desirable in industrial mass production, thanks to the subsequent reduction of the specific production and labour costs.

One of the main problems of said system is the maintenance and/or possible repair on the "heart" of the mechanism, i.e. the water pump with double function of crushing and flushing the wastewater.

In these cases, the user has a considerable inconvenience, because it's necessary to empty the crushing tank holding the water pump. This operation is obviously not easy to carry out, however nowadays there are not known systems making this process easier.

Actually, until now, due to the same composition of the water to convey, we have chosen very inconvenient solutions, such as the intake of the content of the tank directly from its top opening, or the operation to drain the content by means of the traditional tools and hydraulic supports. Obviously, these operations require the use of pumps supplied with ends of suitable shape, as well as the help of experts, provided with necessary equipments, thus involving time and economic drawbacks. As a matter of fact, any even simple operation of maintenance on the water pump, on the crushing element, or even the simple removal of objects accidentally dropped inside the tank, need its previous drainage.

It's therefore very important to make these operations easier, avoiding the help of experts that involves high costs.

### Disclosure of invention

This invention aims at eliminating the above-mentioned drawbacks, supplying a device consisting of a membrane collector that can be easily broken by the nozzle of the collecting bag, said device having three different manufacturing methods, with the advantage of a safer tight seal of the collected material with the outside, a lower cost, a greater ease of use and a simple and rapid replacement of the collector once used, so as to immediately restart its conditions.

This invention is characterized by a plug/collector, made of rubbery or plastic material, or ultra-light metals, having an appropriate relation hardness-elasticity, which is inserted by pressure or screw into a suitable hole, passing or threaded indeed, placed at the minimum level of the container to drain.

The plug of this collector is a membrane, suitably weakened in the thickness along its perimeter, so that it can be easily broken by the pointed nozzle of the collecting bag. Obviously, this nozzle has external shape and sizes corresponding to the internal shape and sizes of the collector, so ensuring a safe hydraulic seal. In addition, the same collector makes such arrangements to make the seal with the corresponding hole safe and tight.

Reduced to its essential structure and with reference to the figures of the enclose drawings, a device for closing and draining containers of wastewater, and in particular the crushing tank of a toilet or a crushing box, consists of an internally hollow element (1), with external shape and sizes corresponding to the ones of the hole where it enters, equipped with an external flange (3), connected to it, and internally closed by a membrane (3), connected to it as well, made of a material that can be easily broken by the pressure exerted onto the same membrane.

This device is made of rubber, plastic, ultra-light metals or other resistant and elastic material that allows it to be easily inserted and removed from the tank it is applied to.

This device is applied by simple pressure, getting a perfect seal thanks to the exact size of the coupled diameters.

In order to improve the seal, the device can be equipped with another flange (2), at suitable level corresponding to the thickness of the container, ensuring a double seal, internal and external.

The collector or plug can be fixed and sealed also by thread, further guaranteed by a gasket pressed, during screwing, between the external flange and the outer surface of the container.

In all the solutions, in the portion of the device that enters the tank, a membrane (3) is connected to the same device, said membrane having a weak perimeter and being however made of a material easy to tear by the pressure exerted by any element pressed on it, in particular by a nozzle connected to a bag collecting the sewage.

As a matter of fact, in order to flush the container, a hollow nozzle is used, suitably connected to a collecting bag that, when inserted, tears the inner membrane of the collector/plug, so permitting the collection of the sewage, therefore the draining of the container, as the hole is at the minimum possible level.

The device is placed on the wall of the toilet and/or box, at the minimum level, in order to allow the sewage to flow out in the best way, thanks to the principle of the communicating vessels.

The supply of each collecting bag connected to the nozzle includes also a second hollow plug that will replace the one previously torn, so as to restart simply and hygienically the whole function of the device, therefore of the crushing and flushing apparatus.

This device has small sizes, low cost and can be manufactured with standard sizes in mass production, by moulding, pressure casting or any other technology concerning plastic and non-plastic materials, however with the same result of getting an accessory economically convenient compared with its great usefulness.

In practice, the manufacturing details may, however, vary as regards shape, size, position of elements and type of materials used, but still remain within the range of the idea proposed as a solution and, consequently, within the limits of the protection granted by this patent for invention.

### Brief description of drawings

The characteristics of the present invention can be better understood by every expert in this field, referring to the enclosed drawings, given as practical examples of the invention, but not to be considered restrictive.

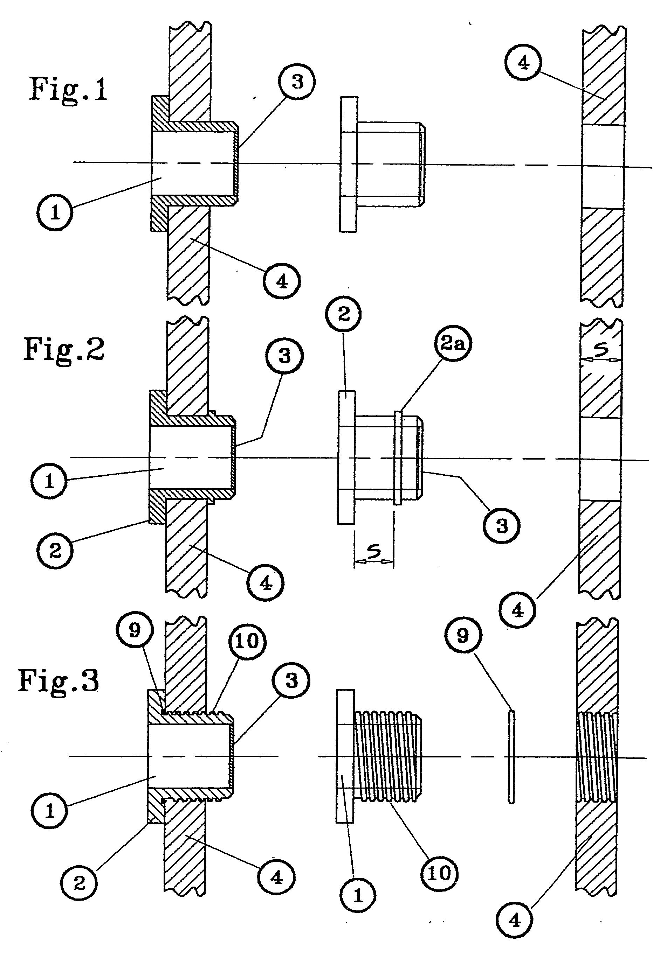

- Fig. 1 shows a first solution of the collector (1), made of an open ferrule, with a flange resting on the surface of the container (4) and a membrane plugging disc (3). The seal in this case is guaranteed by the tight relative tolerance between hole and external diameter of the same collector.
- Fig. 2 depicts a different solution, showing the external flange (2) as well as an internal flange (2A), placed at definite distance (S) corresponding to the thickness of the container; in this way, we get a greater hydraulic seal of the collector. The internal membrane disc (3) remains the same as the previous solution.

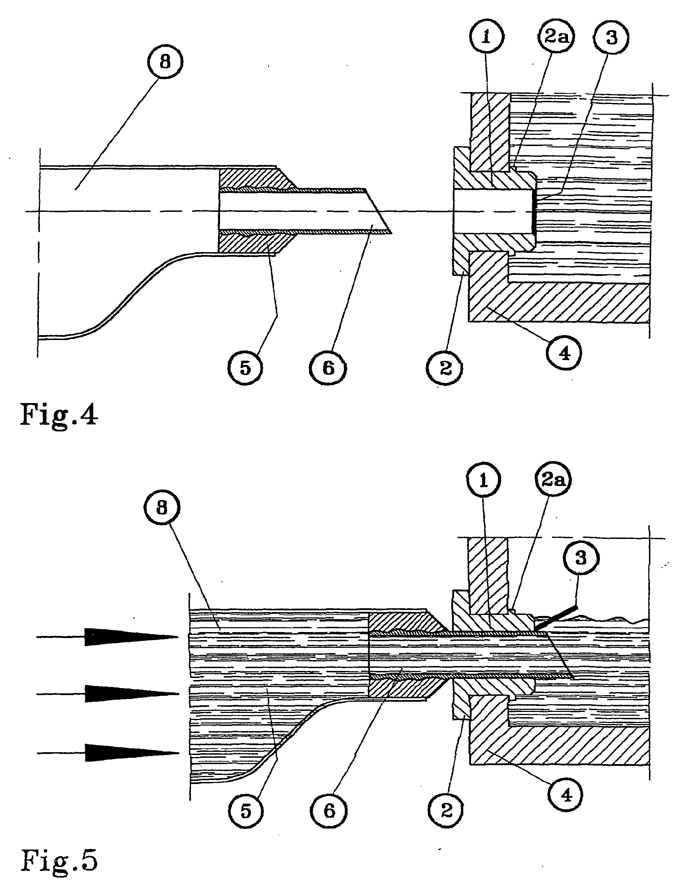

- Fig. 3 depicts a further solution, showing the thread (10) of the collector fitting into the thickness of the container (4). In order to guarantee the hermetic seal, a gasket (9) is placed in a suitable area between the flange (2) and the external surface of the container (4), ensuring a perfect isolation. Also this solution however comprises the inner membrane (3) that will be torn, as this is the principal characteristic of this invention.
- Fig. 4 shows the collecting bag (8), not inserted yet, with the nozzle (6) having its external diameter exactly suitable to be fitted into the collector (1). Said nozzle is part of a suitable support (5), which is hermetically sealed with the bag collecting the sewage.
- Fig. 5 shows the nozzle fitted into the collector (1), so as to tear the membrane (3) and permit the passage of the sewage into the bag (8).

## Claims

1. Device for closing and draining containers of wastewater, and in particular a crushing box or a toilet with crushing apparatus, **characterised in that** it comprises an internally hollow element (1), with external shape and sizes corresponding to the ones of the hole where it enters, equipped with an external flange (3), connected to it, and internally closed by a membrane (3), connected to it as well, made of a material that can be easily broken by the pressure exerted onto the same membrane.

2. Device as claimed in claim 1, **characterized in that** it is made of rubber, plastic, ultra-light metals or other resistant and elastic material that allows it to be easily inserted and removed from the tank it is applied to.

3. Device as claimed in claim 1, **characterized in that** the plug of the same device is a membrane, suitably weakened in the thickness along its perimeter, so that it can be easily broken by the pointed nozzle of the collecting bag, said nozzle having external shape and sizes corresponding to the internal shape and sizes of the collector.

4. Device as claimed in claim 1, **characterized in that** it is applied by simple pressure, getting a perfect seal thanks to the exact size of the coupled diameters.

5. Device as claimed in claim 1, **characterized in that** it is equipped with another flange (2), at suitable level corresponding to the thickness of the container, ensuring a double seal, internal and external.

6. Device as claimed in claim 1, **characterized in that** it is fixed and sealed also by thread, both on the outer surface of the same device and on the inner surface of the hole where it enters, further guaranteed by a gasket pressed, during screwing, between the external flange and the outer surface of the container.

7. Device as claimed in claim 1, **characterized in that** it is placed on the wall of the toilet and/or box, at the minimum level, in order to allow the sewage to flow out in the best way, thanks to the principle of the communicating vessels.
